# EUROPEAN PATENT APPLICATION

(11) **EP 1 564 651 A1**
(43) Date of publication of application: **17.08.2005**
(21) Application number: 05000506.5
(22) Date of filing: 12.01.2005
(51) Int. Cl.: G06F 17/21, G06F 17/24

(54) **Method and system for providing automated actions on recognised text strings**

(30) Priority: 17.02.2004 US 780376
(71) Applicant: MICROSOFT CORPORATION, Redmond, WA 98052 (US)
(72) Inventor: Reynar, Jeffrey C., Woodinville Washington 98072 (US); Broman, Paul A., 201 Altamonte Springs Florida 32701 (US)
(74) Representative: Grünecker, Kinkeldey, Stockmair & Schwanhäusser Anwaltssozietät

(57) **Abstract**

Methods and systems provide for automatically performing actions on or in association with text or data strings that are recognized as belonging to certain semantic categories. Text entered by a user is passed to a recognizer application. If a given text or data string is recognized as belonging to a given semantic category, the recognizer application passes data corresponding to the recognized string back to a host application. In response to recognized text or data, a pointer to the object model of the host application may be passed to the recognizer application to allow the recognizer application to perform any function of the host application in response to the recognized string. Alternatively, after the recognizer application passes data corresponding to the recognized string back to the host application, the host application may fire an application level or document level event for causing an action component to perform desired actions on recognized strings. Alternatively, after a string is recognized by the recognizer application, the recognizer application may set a property associated with a desired action to be performed on or in association with the recognized string. The host application may call an action component identified by the property for automatically performing the desired action on or in association with the recognized string.

## Description

### Field of the Invention

The present invention generally relates to text and data recognition in computer-generated documents. More particularly, embodiments of the present invention relate to methods and systems for providing automated actions on or in association with recognized text and data strings in computer-generated documents.

### Background of the Invention

Since the advent of the computer and software age, software developers have attempted to provide helpful functionality to software users that are contextual in nature. For example, software has been developed for detecting that a user is entering a date into a computer-generated document as the user is typing the date. Before the user can complete the date, the software application offers to automatically complete the date for the user. Other software has been developed for offering users helpful actions in response to certain data entered by the user. For example, if the user's word processor application recognizes that the user has entered a date, the user may be offered an action that will launch the user's electronic calendar to allow the user to check appointments or to verify information in his or her calendar for the entered date.

Systems have been developed for recognizing and labeling a string of text or data, such as a name, date, address, and the like. After the string is recognized and labeled as belonging to a particular semantic category, the user allowed to select and initiate some type of action on the recognized string. For example, if the string of text is recognized and labeled as belonging to the semantic category "name", the user may be allowed to initiate an action that adds the name to user's contacts database.

Unfortunately, such systems do not allow for actions to occur automatically upon the recognition of a string of text or data as belonging to a given semantic category. That is, according to such systems, after a given text string is recognized and labeled as belonging to a given semantic category, available actions on or in association with the recognized and labeled string may be provided to the user, but the user must select from the provided actions in order to initiate the selected action.

It is with respect to these and other considerations that the present invention has been made.

### Summary of the Invention

Embodiments of the present invention provide methods and systems for automatically performing actions on or in association with text or data strings that are recognized as belonging to certain semantic categories. Generally, according to aspects of the present invention, a user enters text or data into a computer-generated document using a host software application, such as a word processor application, a spreadsheet application, a contacts database application, a calendaring application, a slide presentation, or the like. Text entered by the user is passed to a recognizer application. The recognizer application may be a dynamically-linked library application. At the recognizer application, the text may be passed to one or more other recognizer applications that may be tasked with recognizing text or data as belonging to particular semantic categories. For example, one recognizer application may be tasked with recognizing text or data belonging to the semantic category of "names." Another recognizer application may be tasked with recognizing text or data strings as belonging to a different semantic category such as "dates." If a given text or data string is recognized as belonging to a given semantic category, the recognizer application passes data corresponding to the recognized string back to the host application.

According to one aspect of the invention, upon recognition of a given string as belonging to a given semantic category, a pointer to the object model of the host application is passed to the recognizer application. After the recognizer application receives the pointer to the object model of the host application, the recognizer application may perform any function of the host application in response to the recognized string. For example, the recognizer application may apply formatting to the recognized string, or the recognizer application may perform additional recognition on the string by parsing other portions of the document to obtain contextual information associated with the recognized string. Because the recognizer application has access to the object model of the host application, the recognizer application may perform any action on the recognized string or any other portion of the document according to functionality provided by the object model of the host application.

According to another aspect of the invention, after the recognizer application passes data corresponding to the recognized string back to the host application, the host application fires an application level or document level event. An action component designated for performing actions on recognized strings of the type recognized by the recognizer application detects or traps the event and then automatically performs whatever function that action component is programmed to perform. For example, if the action component comprises software programming for applying formatting, such as boldfacing to a recognized string, that action component will automatically apply the defined formatting to the text string upon detection or trapping of the event fired by the host application.

According to another aspect of the invention, after a string is recognized by the recognizer application, the recognizer application sets a property associated with a desired action to be performed on or in association with the recognized string. The recognizer application passes information to the host application to identify the recognized string, and the recognizer application passes the property set by the recognizer application to the host application in order to identify to the host application a particular action that should be performed on or in association with the recognized string. The host application calls an action component identified by the property set by the recognizer application, and the called action component automatically performs its programmed action on or in association with the recognized string. For example, if the called action component is programmed to create a bibliography file in association with a string recognized as an author's name, that action component may open a bibliography file. As should be understood, the foregoing examples are by way of illustration only and are not limiting to the scope of the present invention as claimed herein.

These and other features and advantages, which characterize the present invention, will be apparent from a reading of the following detailed description and a review of the associated drawings. It is to be understood that both the foregoing general description and the following detailed description are exemplary and explanatory only and are not restricted of the invention as claimed.

### Brief Description of the Drawings

Figure 1 is a block diagram showing the architecture of a personal computer that provides and illustrative operating environment for embodiments of the present invention.
Figure 2 is a block diagram that illustrates software architecture for recognizing, labeling, and performing actions on strings of text or data according to various embodiments of the present invention.
Figures 3, 4 and 5 are flow diagrams showing illustrative routines for automatically performing actions on recognized strings of text or data according to embodiments of the present invention.

### Detailed Description

As described briefly above, embodiments of the present invention are directed to methods and systems for automatically performing actions on strings of text or data recognized as belonging to certain semantic categories. In the following detailed description, references are made to the accompanying drawings that form a part hereof, and in which are shown by way of illustrations specific embodiments or examples. These embodiments may be combined, other embodiments may be utilized, and structural changes may be made without departing from the spirit or scope of the present invention. The following detailed description is therefore not to be taken in a limiting sense and the scope of the present invention is defined by the appended claims and their equivalents.

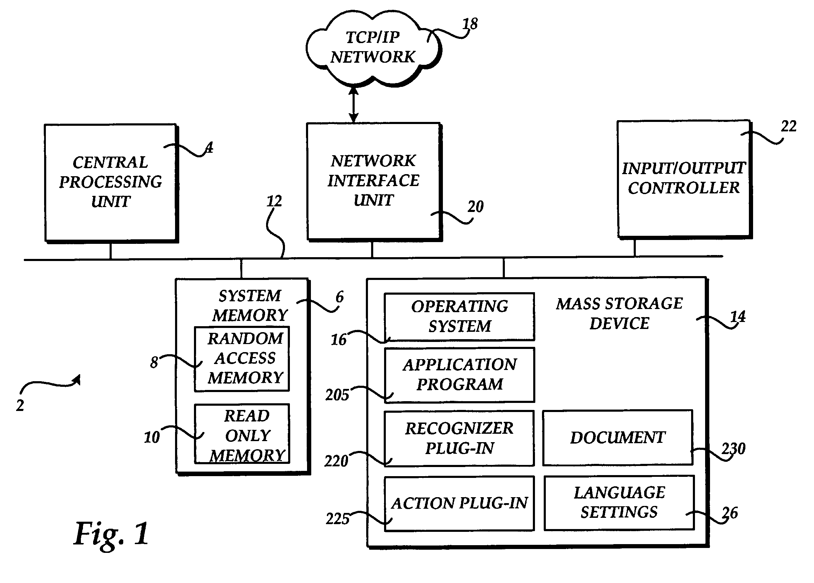

Referring now to the drawings, in which like numerals represent like elements through the several figures, aspects of the present invention and the exemplary operating environment will be described. FIGURE 1 and the following discussion are intended to provide a brief, general description of a suitable computing environment in which the invention may be implemented. While the invention will be described in the general context of program modules that execute in conjunction with an application program that runs on an operating system on a personal computer, those skilled in the art will recognize that the invention may also be implemented in combination with other program modules. Additional aspects of an illustrative operating environment and software architecture for implementing the various embodiments of the present invention are described in U.S. Patent Application No. 09/588,411, entitled "Method and System for Semantically Labeling Strings and Providing Actions Based on Semantically Labeled Strings", which is expressly incorporated herein by reference.

Generally, program modules include routines, programs, components, data structures, and other types of structures that perform particular tasks or implement particular abstract data types. Moreover, those skilled in the art will appreciate that the invention may be practiced with other computer system configurations, including handheld devices, multiprocessor systems, microprocessor-based or programmable consumer electronics, minicomputers, mainframe computers, and the like. The invention may also be practiced in distributed computing environments where tasks are performed by remote processing devices that are linked through a communications network. In a distributed computing environment, program modules may be located in both local and remote memory storage devices.

Turning now to FIGURE 1, an illustrative computer architecture for a personal computer 2 for practicing the various embodiments of the invention will be described. The computer architecture shown in FIGURE 1 illustrates a conventional personal computer, including a central processing unit 4 ("CPU"), a system memory 6, including a random access memory 8 ("RAM") and a read-only memory ("ROM") 10, and a system bus 12 that couples the memory to the CPU 4. A basic input/output system containing the basic routines that help to transfer information between elements within the computer, such as during startup, is stored in the ROM 10. The personal computer 2 further includes a mass storage device 14 for storing an operating system 16, application programs, such as the application program 205, and data.

The mass storage device 14 is connected to the CPU 4 through a mass storage controller (not shown) connected to the bus 12. The mass storage device 14 and its associated computer-readable media, provide non-volatile storage for the personal computer 2. Although the description of computer-readable media contained herein refers to a mass storage device, such as a hard disk or CD-ROM drive, it should be appreciated by those skilled in the art that computer-readable media can be any available media that can be accessed by the personal computer 2.

By way of example, and not limitation, computer-readable media may comprise computer storage media and communication media. Computer storage media includes volatile and non-volatile, removable and non-removable media implemented in any method or technology for storage of information such as computer-readable instructions, data structures, program modules or other data. Computer storage media includes, but is not limited to, RAM, ROM, EPROM, EEPROM, flash memory or other solid state memory technology, CD-ROM, DVD, or other optical storage, magnetic cassettes, magnetic tape, magnetic disk storage or other magnetic storage devices, or any other medium which can be used to store the desired information and which can be accessed by the computer.

According to various embodiments of the invention, the personal computer 2 may operate in a networked environment using logical connections to remote computers through a TCP/IP network 18, such as the Internet. The personal computer 2 may connect to the TCP/IP network 18 through a network interface unit 20 connected to the bus 12. It should be appreciated that the network interface unit 20 may also be utilized to connect to other types of networks and remote computer systems. The personal computer 2 may also include an input/output controller 22 for receiving and processing input from a number of devices, including a keyboard or mouse (not shown). Similarly, an input/output controller 22 may provide output to a display screen, a printer, or other type of output device.

As mentioned briefly above, a number of program modules and data files may be stored in the mass storage device 14 and RAM 8 of the personal computer 2, including an operating system 16 suitable for controlling the operation of a networked personal computer, such as the WINDOWS operating system from MICROSOFT CORPORATION of Redmond, Washington. The mass storage device 14 and RAM 8 may also store one or more application programs. In particular, the mass storage device 14 and RAM 8 may store an application program 205 for creating and editing an electronic document 230. For instance, the application program 205 may comprise a word processing application program a spreadsheet application, a contact application, and the like. Application programs for creating and editing other types of electronic documents may also be used with the various embodiments of the present invention.

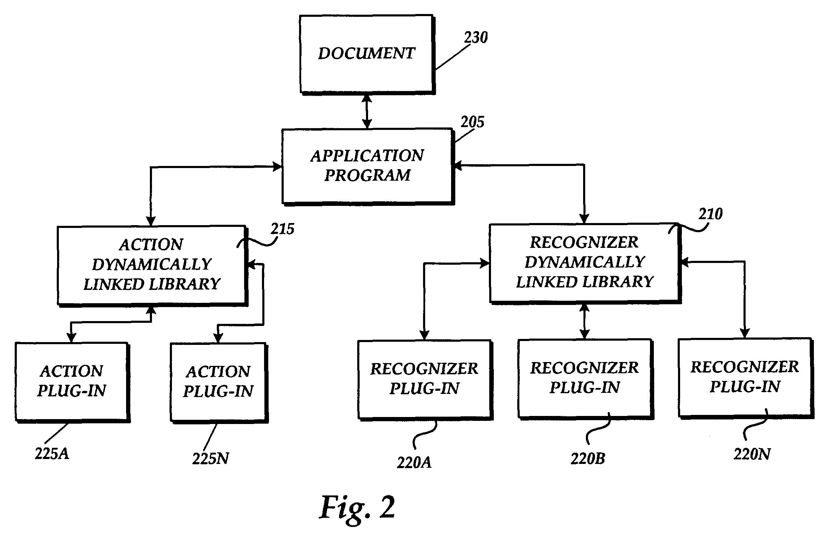

Referring now to FIGURE 2, an illustrative software architecture for use in conjunction with the various embodiments of the present invention will be described. The architecture shown in FIGURE 2 includes an application program 205, such as a word processor application program, a spreadsheet application program, or other type of application program for creating and editing electronic documents. The application program 205 may also comprise a Web browser. Embodiments of the present invention provide program modules for use in conjunction with the application program 205 that recognize text strings and data and provide helpful actions on the recognized text strings and data. In particular, embodiments of the invention provide a recognizer plug-in 220 and an action plug-in 225. As will be described in greater detail below, the recognizer plug-in 220 recognizes text strings and data in an electronic document 230 and labels the strings and data with semantic information.

The application program 205 is able to communicate with a recognizer dynamically linked library ("DLL") 210 and an action DLL 215. According to one embodiment, the recognizer DLL and the action DLL may be a single DLL capable of performing both recognition and one or more actions. As will be described in greater detail below, the recognizer DLL 210 may control one or more recognizer plug-ins 220A-220N and the action DLL 215 may control one or more action plug-ins 225A-225N.

According to one embodiment of the invention, the recognizer plug-ins 220A-220N and the action plug-ins 225A-225N are automation servers. Automation servers are well-known software components that are assembled into programs or add functionality to existing programs running on WINDOWS operating systems from MICROSOFT CORPORATION of Redmond, Washington. Automation servers may be written in a variety of computing languages and can be plugged and unplugged at runtime without having to recompile the host program.

The recognizer DLL 210 handles the distribution of text strings from an electronic document being edited by the application program 205 to the individual recognizer plug-ins 220A-220N. The recognizer plug-ins 220A-220N recognizes particular strings in an electronic document, such as a word processing document or a spreadsheet document. The recognizer plug-ins 220A-220N may be packaged with the application program module 205 or they may be written by third parties to recognize particular strings of interest. Typically, the recognizer DLL 210 passes strings to the recognizer plug-ins 220A-220N in single paragraphs or cell value increments. However, strings may be passed to the recognizer plug-ins 220A-220N in other sizes and formats.

As part of recognizing certain strings as including semantic information, the recognizer plug-ins 220A-220N determine which strings are to be labeled and how they are to be labeled. After receiving these results from the various recognizer plug-ins 220, the recognizer DLL 210 sends semantic categories to the application program module 205. For example, a name recognizer plug-in 220A may be provided for recognizing strings as containing names. Additionally, the recognizer plug-in 220 may return information identifying the location of the string, including the length of the string.

It should be appreciated that each of the recognizer plug-ins 220A-220N are executed separately. The recognizer DLL 210 is responsible for handling the asynchronicity that results from different recognizer plug-ins 220A-220N returning results at different times. In this manner, various types of data may be recognized within a text string and different actions provided for each semantically labeled string.

After a string is recognized by a recognizer plug-in 220A-220N, desired actions may be executed on the recognized string. The action DLL 215 manages the action plug-ins 225A-225N that are executed in order to perform the actions. As with the recognizer plug-ins 220A-22N, the action plug-ins 225A-225N may be packaged with the application program module 205 or written by third parties to perform particular actions that are of interest. As briefly described above, a given action component may be executed by trapping an event fired by the host application 205 after a string is recognized associated with the given action component. Alternatively, a given action component may be called by the host application in response to a property passed to the host application by the recognizer application identifying the action component associated with the desired action. The executed action components may be comprised of one or more action DLLs and associated action plug-ins.

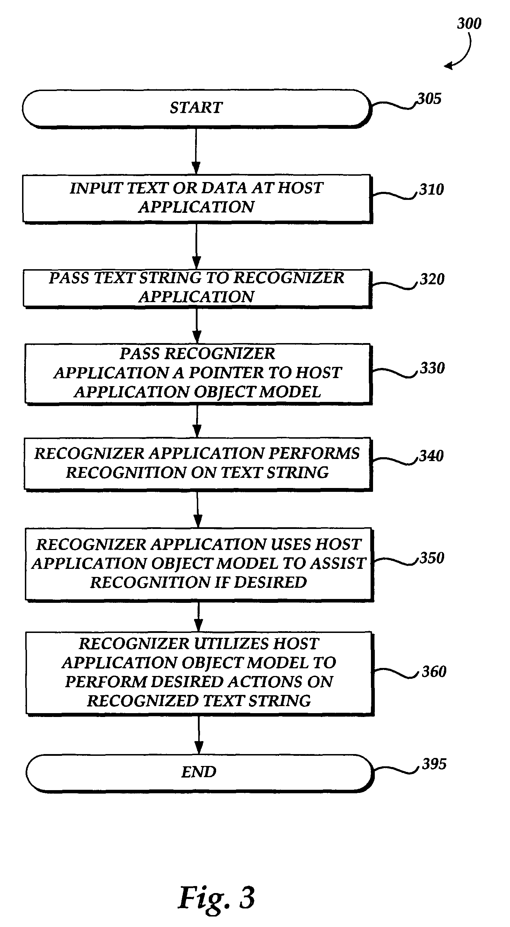

Having described the interaction between the host application and exemplary recognizer applications and action applications in recognizing and labeling text strings according to semantic categories and in performing actions on or in association with recognized strings, Figures 3, 4 and 5 are flow diagrams showing illustrative routines for automatically performing actions on recognized strings of text or data according to embodiments of the present invention. Referring to Figure 3, according to one embodiment of the present invention, and as briefly described above, an automated action may be performed on or in association with a recognized text or data string by passing the recognizer application 210 a pointer to the object model of the host application 205 to allow the recognizer application 210 to utilize functionality of the application program 205 to automatically perform actions on or in association with the document 230.

The illustrative routine 300 illustrated in Figure 3 begins at start block 305 and proceeds to block 310 where text or data is input into the document 230 using the host application 205. At block 320, as described above with reference to Figure 2, a portion of text or data is passed from the application 205 to the recognizer application 210 so that the recognizer application 210 or other recognizer applications 220A through 220N may perform recognition on the portion of text or data passed to the recognizer application 210. At block 330, the recognizer application 210 is passed a pointer to the object model of the host application 205. According to one embodiment of the invention the text and the pointer to the host application object model may be passed to the recognizer application at the same time via one method. At block 340, the recognizer application 210 performs recognition on the text or data passed to it by the host application 205. As described above with reference to Figure 2, the recognizer application may pass the text or data received from the host application to one or more recognizer plug-ins 220A-220N for assistance with recognition. For example, the recognizer plug-in 220A may be program for recognizing names contained in a given text selection.

At block 350, the recognizer application 210 or any of the individual recognizer plug-ins 220A-220N may utilize the pointer to the host application object model to assist in additional recognition, if desired. For example, if the recognizer application 210 or one of the individual recognizer plug-ins 220A-220N recognizes a given text string as the name of a state in an address string, the recognizer application may utilize the host application object model to parse other portions of the document 230 to obtain contextual information associated with the text string being recognized by the recognizer application. For example, if the recognizer application parses the document 230 and detects a five digit number (e.g., zip code) following the text string previously recognized as the name of a state, the recognizer application may utilize that information to assist in verifying or raising the confidence level of the recognition process that the text string recognized as the name of a state is in fact the name of state.

At block 360, the recognizer application utilizes the host application object model to perform desired actions on or in association with the recognized string. For example, if the document is a newspaper article in which the newspaper editor directs that all person names are to be bold-faced, according to this embodiment of the present invention, the recognizer application may utilize the object model of the host application 205 to apply boldfacing to any recognized person name contained in the newspaper article document. That is, by accessing the object model of the host application via the pointer to the host application object model, the recognizer application is able to apply formatting, such as boldfacing, of the host application to any text string in the document 230 recognized as a person name. Accordingly, the user entering text into the document is not required to manually boldface text entries recognized as names, nor is the user even required to elect or accept an offer by the host application to boldface recognized names for the user. The recognized names in the document are automatically boldfaced by the recognizer application using the object model of the host application. As should be understood by those skilled in the art, because the recognizer application 210 has access to the object model of the host application, the recognizer application can automatically perform any function available to the host application on or in association with a given recognized text or data string. Once the desired action is performed on or in association with a given recognized text or data string, the routine ends at block 395.

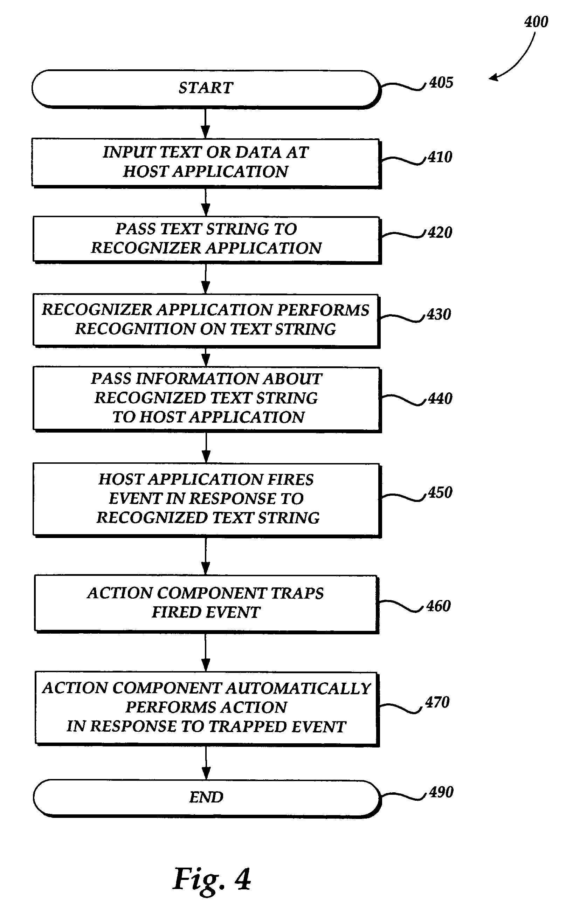

According to an alternative embodiment of the present invention, and as briefly described above, after the recognizer application recognizes a text or data string as corresponding to a particular semantic category, the recognizer application notifies the host application of the recognized string, and the host application fires an application level or document level event which is detected or trapped by an action application or component which in turn automatically performs an action on or in association with the recognized string. Referring to Figure 4, the illustrative routine 400 begins at start block 405 and proceeds to block 410 where text or data is input into the document 230 via the host application 205. At block 420, a portion of the text or data input is passed to the recognizer application 210 and/or on to one of the individual recognizer plug-in applications 220A-220N as required. At block 430, recognition is performed on the text or data selection, as described above with reference to Figures 2 and 3. At block 440, information identifying a given text or data string as having been recognized as belonging to a given semantic category, for example, names, addresses, dates, bibliography information, and the like, is passed to the host application 205 from the recognizer application 210.

At block 450, the host application 205 receives the information from the recognizer application 210 identifying a given text or data string as belonging to a given semantic category. In response, the host application fires an application level or document level event to cause an action application 215 or other action application plug-in 225A-225N to perform an automated action on or in association with the recognized text or data string. As should be understood by those skilled in the art, according to this embodiment of the present invention, the action application 215, 220A, 225N may be an action handler or other component able to register itself as an event handler that may detect or trap the event fired by host application 205 for causing the action application to perform a desired function. Those skilled in the art of software programming, for example those skilled the art of component object modeling, will appreciate the registration of a component as an action handler that may receive an event fired by another component such as the host application 205 to cause the action handler component to perform some desired function. For example, an action application 215 may be a software component that may register itself as an action handler for performing some function such as formatting a particular text string in a document 230. Likewise, an action application 215 may be a component that may be programmed to perform some other function such as creating a bibliography document from text selections recognized as bibliography information by a recognizer application 210.

At block 460, the action component such as one of the action applications 215, 225A, 225N detects or traps the event fired by the host application 205. At block 470, the action component to which the event is fired automatically performs an action on or in association with the recognized text or data string in response to the detected or trapped event fired by the host application 205. Following from the example provided above, if the recognizer application 215 recognizes a given text string as bibliography information such as an author's name, information identifying that text string as bibliography information is passed to the host application 205, as described above, with reference to block 440. The host application 205 in turn fires an event to an action application 215 that has been programmed to create a bibliography document containing bibliography information recognized from the document 230. When the action application 215 traps the event fired by the host application 205, the action application 215 in turn opens or creates a bibliography document and populates the bibliography document with the text string from the document 230 recognized by the recognizer application 210 as bibliography information. No user intervention or action is required as the bibliography document is automatically created by the action application 215 upon receipt of the event fired by the host application 205. The routine ends at block 490.

According to another embodiment of the present invention, and as briefly described above, after a recognizer application recognizes a text or data string as corresponding to a given semantic category, the recognizer application passes information identifying the recognized text or data string to a host application 205, and the recognizer application also passes to the host application 205 a short message in the form of a set property that causes the host application 205 to run a particular action component or action application in response to the recognized text or data string

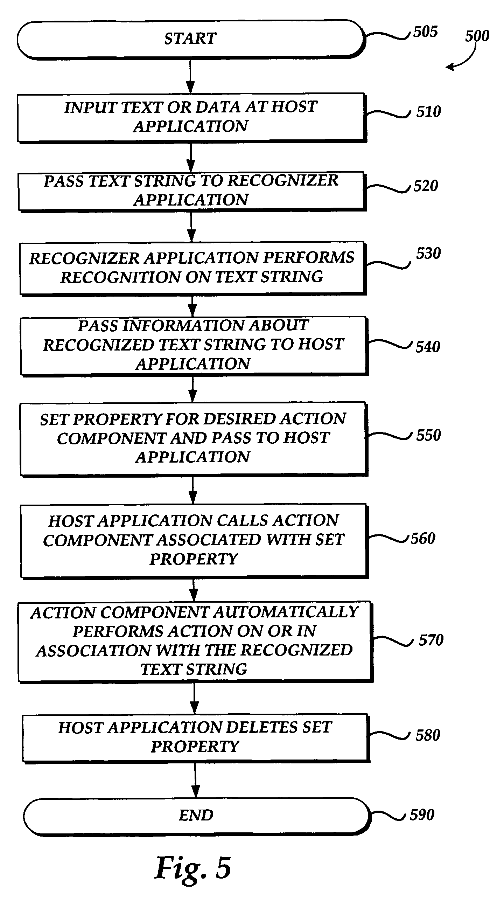

Referring now to Figure 5, the routine 500 begins at start block 505 and proceeds to block 510 where text or data is input into the document 230 via the host application 205. At block 520, a portion of text or data is passed by the host application 205 to one or more recognizer applications 210, 220A, 220N, as described above with reference to Figures 2, 3, and 4. At block 530, the recognizer application recognizes one or more text or data strings as belonging to a given semantic category. At block 540, information identifying a given text or data string as belonging to a given semantic category is passed by the recognizer application 210 to the host application 205. As should be understood, the information passed to the host application form the recognizer application 210 may include a precise location range in the document 230 where the recognized text string is located along with information identifying the recognized text string as belonging to a particular semantic category.

At block 550, the recognizer application sets a property equal to the name of an action that by should be automatically performed on or in association with the recognized text or data string. For example, say that a given text string is recognized by a recognizer application 210 as an address. Say further that the recognizer application 210 has been programmed to require that recognized addresses be populated into the user's contacts database upon recognition. According to embodiments of the present invention, at block 550 the recognizer application 210 sets a property equal to the name of an action component or action application 215 that has been programmed to populate the user's contacts database with recognized addresses. For example, the recognizer application 210 may set a property of "o:runaction=populatecontactsdatabasewithaddress," where "o" refers to the host application Extensible Markup Language (XML) namespace, for example the Microsoft Office XML namesapce, where "runaction" is the name of the property, and where the property "populatecontactsdatabasewithaddresses" is utilized by the host application 205 to call an action application 215 identified for populating the user's contacts database with recognized addresses. According to one embodiment of the invention the identification information (block 540) and the set property (block 550) may be passed to the host application at the same time via one method.

According to embodiments of the present invention, the property set by the recognizer application 210 may be deposited by the recognizer application 210 into a data structure for containing property values set by the recognizer application 210. The data structure also known, as a "property bag" may contain property values set by the recognizer application 210 until those values are subsequently deleted by the host application 205, as described below. When the recognizer application 210 passes to the host application 205 information identifying the recognized text or data string, the recognizer application 210 also passes the host application 205 a pointer to the property values set by the recognizer application 210 and stored in the property data structure or property bag. Accordingly, when the host application 205 receives the information from the recognizer application 210, the host application 205 utilizes the pointer into the property bag to retrieve the property value set by the recognizer application 210 for directing the host application 205 to a particular action application 215.

At block 560, the host application 560 retrieves the property value set by the recognizer application 210 and calls a particular action application 215, 225A, 225N designated by the property value set by the recognizer application 210. Following from the previous example, if the property value set by the recognizer application 210 identifies an action application 215 for populating the user's contacts database with recognized address information, the host application will call that action application, and at block 570, the action application will automatically perform the action on or in association with the recognized text string. For example, following from the previous example, the action application 215 may launch an instance of the user's contacts database application and populate the user's contacts database application with address information recognized from the document 230 by the recognizer application 210. Accordingly, no user action is required because the recognized address entered into the document 230 is automatically populated into the user's contacts database according to embodiments of the present invention.

At block 580, after the desired action is automatically performed, the host application 205 deletes the property values set by the recognizer application 210 to prevent the host application from inadvertently calling the action application 215 subsequently where that action is not required. The routine ends at block 590.

As described herein, methods and systems are provided for automatically providing actions on or in association with text or data recognized in a computer-generated document as belonging to particular semantic categories. It will be apparent to those skilled in the art that various modifications or variations may be made in the present invention without departing from the scope or spirit of the invention. Other embodiments of the invention will be apparent to those skilled in the art from consideration of the specification and practice of the invention disclosed herein.

## Claims

1. A method of automatically performing actions on or in association with recognized text strings, comprising:
receiving a text string from a computer-generated document;
passing the text string to a recognizer application;
recognizing the text string as belonging to a given semantic category;
passing the recognizer application a pointer to an object model of a host application from which the text string is received; and
utilizing the object model of the host application, performing one or more actions on the recognized text string in the computer-generated document.

2. The method of Claim 1, whereby receiving the text string from the computer-generated document includes receiving the text string at the host application; and
whereby passing the text string to a recognizer application includes passing the text string from the host application to the recognizer application.

3. The method of Claim 1, prior to performing one or more actions on the recognized text string, accessing the object model of the host application by the recognizer application via the pointer to the object model.

4. The method of Claim 1, whereby performing one or more actions on the recognized text string includes parsing the computer-generated document containing the text string for contextual information associated with the text string; and
utilizing the contextual information by the recognizer application to perform additional recognition on the text string.

5. The method of Claim 1, whereby performing one or more actions on the recognized text string includes performing one or more actions on the recognized text string without user action.

6. A method of automatically performing actions on or in association with recognized text or data strings, comprising:
receiving a text string from a computer-generated document;
passing the text string to a recognizer application;
recognizing the text string as belonging to a given semantic category;
passing information from the recognizer application to a host application from which the text string is received, said information identifying the text string as belonging to the given semantic category;
at the host application, firing an event associated with an action application programmed to perform a desired action on the text string; and
in response to the fired event, causing the action application to perform the desired action on the recognized text string in the computer-generated document.

7. The method of Claim 6, whereby receiving the text string from the computer-generated document includes receiving the text string from the host application; and further comprising
passing the text string from the host application to the recognizer application.

8. The method of Claim 6, whereby passing information from the recognizer application to the host application includes passing the location of the text string in the computer-generated document from which the text string is received.

9. The method of Claim 6, whereby firing an event associated with an action application programmed to perform a desired action on the text string includes firing a document level event.

10. The method of Claim 6, whereby firing an event associated with an action application programmed to perform a desired action on the text string includes firing an application level event.

11. The method of Claim 6, prior to causing the action application to perform the desired action on the recognized text string in the computer-generated document, causing the action application to trap the fired event from the host application.

12. A method of automatically performing actions on or in association with recognized text or data strings, comprising:
receiving a text string from a host application entered into a computer-generated document;
passing the text string to a recognizer application;
recognizing the text string as belonging to a given semantic category;
passing information from the recognizer application to the host application, said information identifying the text string as belonging to the given semantic category;
at the recognizer application, setting a property value identifying a desired action to be performed on the text string;
at the host application, calling an action application identified by the property value and programmed to performed the desired action on the text string; and
causing the action application to perform the desired action on the text string.

13. The method of Claim 12, whereby receiving the text string from the computer-generated document includes receiving the text string at the host application, and whereby passing the text string to the recognizer application includes passing the text string from the host application to the recognizer application.

14. The method of Claim 12, whereby passing information from the recognizer application to the host application includes passing the location of the text string in the computer-generated document from which the text string is received.

15. The method of Claim 12, whereby setting a property value identifying the desired action to be performed on the text string includes:
at the recognizer application, depositing the property value into a property value data structure; and
passing the host application a pointer to the property value in the property value data structure.

16. The method of Claim 15, further comprising:
at the host application, receiving the pointer to the property value; and
at the host application, utilizing the pointer to the property value to identify the desired action to be performed on the text string in the computer-generated document.

17. The method of Claim 15, after the desired action is performed on the text string in the computer-generated document, deleting the property value from the property value data structure.
